# EUROPÄISCHE PATENTANMELDUNG

(11) **EP 0 868 964 A1**
(43) Veröffentlichungstag der Anmeldung: **07.10.1998**
(21) Anmeldenummer: 97105512.4
(22) Anmeldetag: 03.04.1997
(51) Int. Cl.: B23Q 1/54, B23Q 1/32, B25J 17/02

(54) **Vorrichtung zur Erzeugung einer definierten Positionierung und Orientierung mindestens einer Plattform**

(71) Anmelder: Verein Deutscher Werkzeugmaschinenfabriken e.V. (VDW), 60325 Frankfurt am Main (DE)
(72) Erfinder: Pritschow, Günter, Prof.Dr.Ing.Dr,h.c., 70192 Stuttgart (DE); Wurst, Karl-Heinz, Dr.-Ing., 70825 Korntal-Münchingen (DE)
(74) Vertreter: Kohl, Karl-Heinz

(57) **Zusammenfassung**

Die Vorrichtung dient zur Erzeugung einer definierten Positionierung und Orientierung einer Plattform (P). An sie sind Stabelemente (S1 bis S4) gelenkig angeschlossen. Die Stabelemente sind Teil eines Gelenkviereckes, dessen Winkellage motorisch zur Orientierung der Plattform (P) eingestellt wird. Die Antriebe für die Positionierung und Orientierung der Plattform (P) werden entkoppelt, so daß beispielsweise bei konstanter Orientierung lediglich die Positionsänderung der Plattform (P) vorgenommen wird. Die Plattform (P), die ein Werkzeug- oder ein Werkstückträger einer Werkzeugmaschine sein kann, kann mit hoher Genauigkeit und hoher Beschleunigung einfach positioniert und orientiert werden.

## Beschreibung

Die Erfindung betrifft eine Vorrichtung zur Erzeugung einer definierten Positionierung und Orientierung mindestens einer Plattform nach dem Oberbegriff des Anspruches 1.

Es ist bekannt, die Plattform von sogenannten oktaedrischen Maschinen über sechs Teleskopbeine zu bewegen. Sie ermöglichen die Bewegung in sechs unabhängigen Freiheitsgraden. Die Teleskopbeine sind in Kugelgelenken oder kardanischen Gelenken gelagert und werden über Gewindespindeln, Planetenrollspindeln oder Linear-Direktantriebe angetrieben. Die Antriebe sind hierzu in die Teleskopbeine integriert. Zwischen den Endpunkten an der Plattform und dem ortsfesten Grundgestellteil spannen die Teleskopbeine eine dreieckförmige Fläche auf. Die Gelenke sind am ortsfesten Gestell so angeordnet, daß die Verbindungslinien, die durch die Grundlinien der Dreieckflächen gebildet sind, ein Hexagon beschreiben. Alle Teleskopbeine sind von ihrem einen Ende über nicht verschiebbare Gelenke am ortsfesten Grundgestell verbunden und mit ihren anderen Enden über nicht verschiebbare Gelenke an der Plattform befestigt. Sämtliche Teleskopbeine sind über einen Antrieb in ihrer Länge zwischen den jeweiligen Gelenken verstellbar. Die zur Anwendung kommenden Gewindespindeln haben Spiel, sind mechanisch nachgiebig und erlauben dadurch nur eine begrenzte Dynamik in einem Lageregelkreis bzw. nur eine begrenzte Positioniergenauigkeit. Da in jedem Teleskopbein zahlreiche mechanische Elemente zur Bewegungserzeugung und Bewegungsübertragung untergebracht sind, sind diese Elemente vom jeweiligen Motor des Teleskopbeines bei einem Bewegungsvorgang mit zu beschleunigen. Dies reduziert das mögliche Beschleunigungsvermögen für die Plattform. Eine Veränderung der Orientierung der Plattform kann nur über zusätzliche Elemente erfolgen, deren Lage motorisch verändert wird und die gleichzeitig mit der Positionierung gekoppelt sind. Darum müssen auch bei konstanter Orientierung der Plattform alle Teleskopbeine der Positionsveränderung folgen.

Der Erfindung liegt die Aufgabe zugrunde, die gattungsgemäße Vorrichtung so auszubilden, daß die Plattform mit hoher Genauigkeit und hoher Beschleunigung einfach in die jeweilige Position bzw. Orientierung gebracht werden kann.

Diese Aufgabe wird bei der gattungsgemäßen Vorrichtung erfindungsgemäß mit den kennzeichnenden Merkmalen des Anspruches 1 gelöst.

Bei der erfindungsgemäßen Vorrichtung sind die Stabelemente Teil eines Gelenkviereckes, dessen Winkellage motorisch eingestellt werden kann. Die Stabelemente sind über Gelenkpunkte miteinander verbunden, wobei die Winkellage der Stabelemente und damit der Plattform in den Gelenkpunkten motorisch verstellt werden kann. Die Antriebe für die Positionierung und die Orientierung der Plattform werden entkoppelt, so daß beispielsweise bei konstanter Orientierung lediglich die Positionsänderung der Plattform vorgenommen wird. Die erfindungsgemäße Vorrichtung zeichnet sich darum durch eine konstruktiv einfache Ausbildung aus.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsbeispiele näher erläutert. Es zeigen
- Fig. 1: in schematischer Darstellung ein als Gelenkviereck ausgebildetes Antriebssystem einer erfindungsgemäßen Vorrichtung,
- Fig. 2: in einer Darstellung entsprechend Fig. 1 eine zweite Ausführungsform eines Gelenkvierecks einer erfindungsgemäßen Vorrichtung,
- Fig. 3: eine dritte Ausführungsform eines Gelenkvierecks einer erfindungsgemäßen Vorrichtung,
- Fig. 4: in einer Darstellung entsprechend Fig. 1 eine vierte Ausführungsform eines Gelenkvierecks einer erfindungsgemäßen Vorrichtung,
- Fig. 5: eine fünfte Ausführungsform eines Gelenkvierecks einer erfindungsgemäßen Vorrichtung,
- Fig. 6: in schematischer Darstellung eine erfindungsgemäße Vorrichtung, welche drei Gelenkvierecke aufweist,
- Fig. 6a: eine Vorderansicht der Vorrichtung gemäß Fig. 6,
- Fig. 6b: eine Draufsicht auf die Vorrichtung gemäß Fig. 6,
- Fig. 7: in vereinfachter und perspektivischer Darstellung eine weitere Ausführungsform einer erfindungsgemäßen Vorrichtung,
- Fig. 8: eine weitere Ausführungsform einer erfindungsgemäßen Vorrichtung in vereinfachter perspektivischer Darstellung,

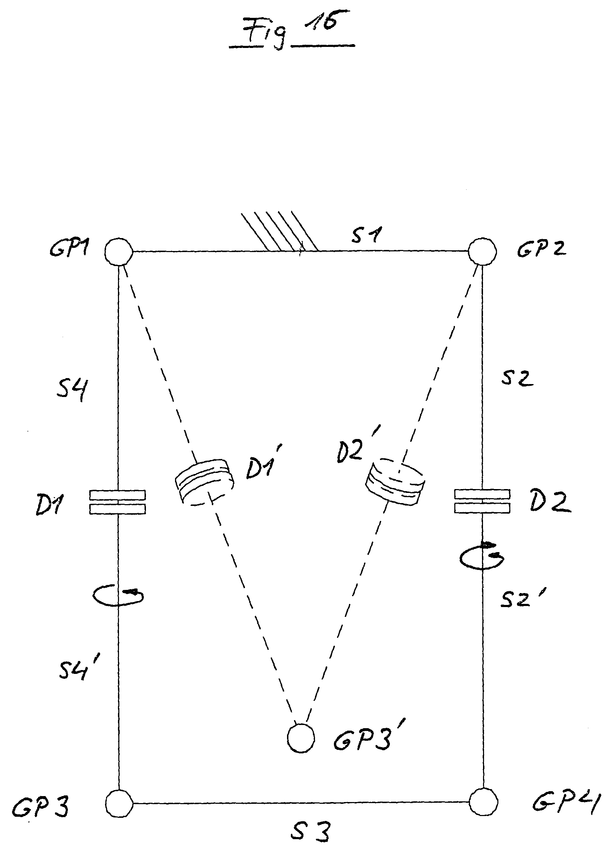

- Fig. 9: in einer Darstellung entsprechend Fig. 8 eine weitere Ausführungsform einer erfindungsgemäßen Vorrichtung,
- Fig. 9a: eine Draufsicht auf die Vorrichtung gemäß Fig. 9,

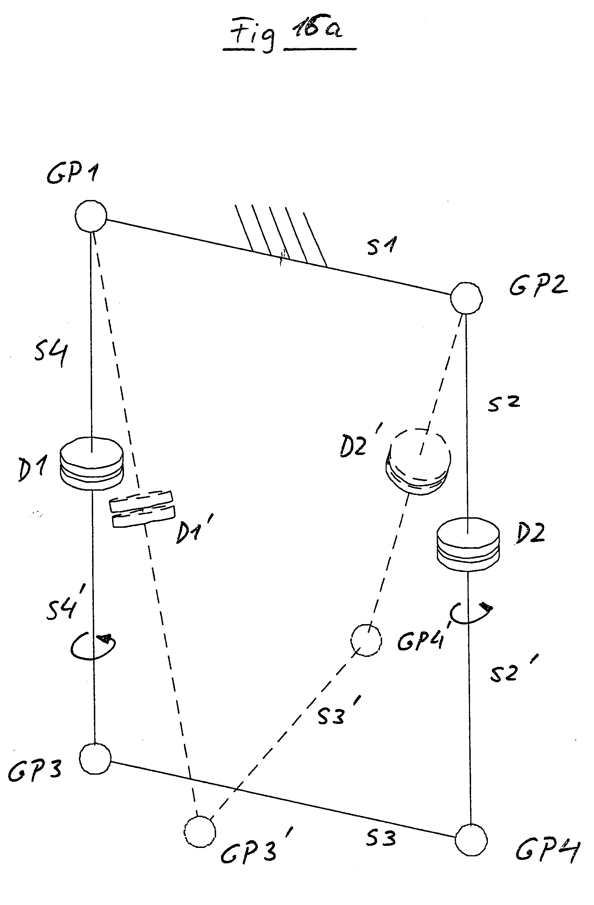

- Fig. 10: in perspektivischer und vereinfachter Darstellung eine weitere Ausführungsform einer erfindungsgemäßen Vorrichtung,

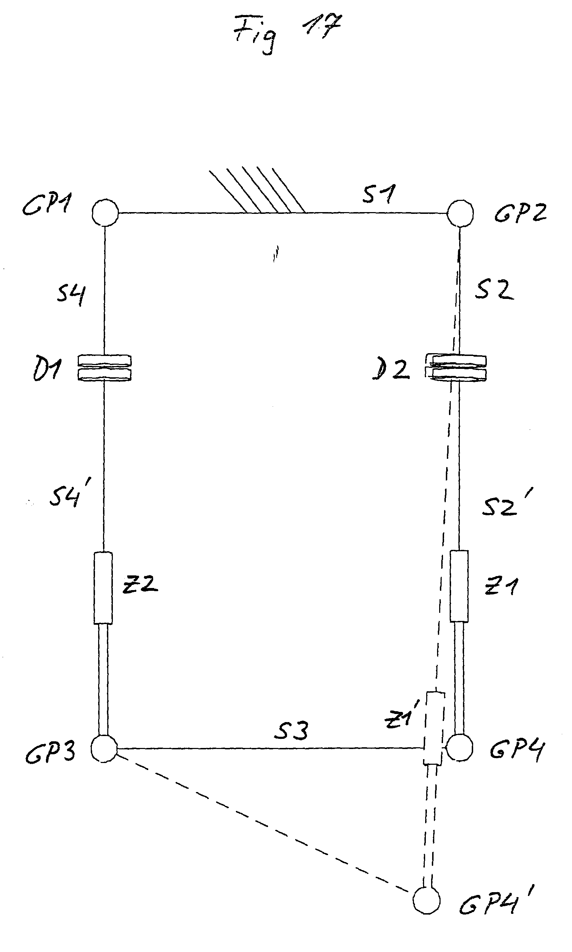

- Fig. 11: eine Vorderansicht einer weiteren Ausführungsform einer erfindungsgemäßen Vorrichtung,
- Fig. 11a: die Vorrichtung gemäß Fig. 11 in perspektivischer Darstellung,

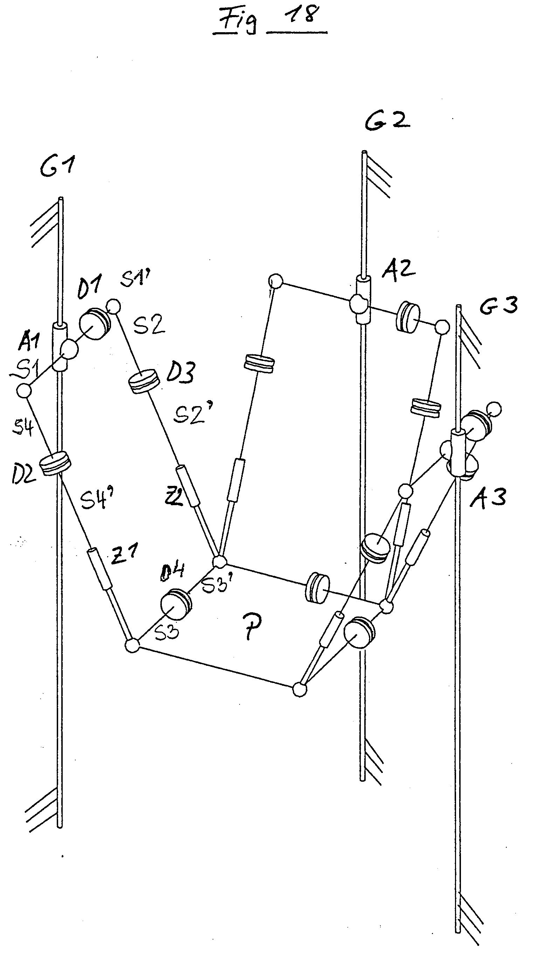

- Fig. 12: in Seitenansicht eine weitere Ausführungsform einer erfindungsgemäßen Vorrichtung,
- Fig. 12a: eine Draufsicht auf die Vorrichtung gemäß Fig. 12,
- Fig. 12b: eine Seitenansicht der Vorrichtung gemäß Fig. 12,
- Fig. 13: eine weitere Ausführungsform eines Gelenkvierecks einer erfindungsgemäßen Vorrichtung,
- Fig. 14: eine Seitenansicht des Gelenkvierecks nach Fig. 13,
- Fig. 15: eine weitere Ausführungsform eines Gelenkvierecks einer erfindungsgemäßen Vorrichtung in vereinfachter perspektivischer Darstellung,
- Fig. 15a: eine Vorderansicht des Gelenkvierecks nach Fig. 15,
- Fig. 16: in Seitenansicht eine weitere Ausführungsform eines Gelenkvierecks einer erfindungsgemäßen Vorrichtung,
- Fig. 16a: das Gelenkviereck nach Fig. 16 in perspektivischer Darstellung,
- Fig. 17: eine Vorderansicht einer weiteren Ausführungsform eines Gelenkvierecks der erfindungsgemäßen Vorrichtung,
- Fig. 18: in vereinfachter und perspektivischer Darstellung eine weitere Ausführungsform einer erfindungsgemäßen Vorrichtung,
- Fig. 18a: eine Vorderansicht der Vorrichtung gemäß Fig. 18,
- Fig. 18b: die Vorrichtung gemäß Fig. 18 in verstellter Lage,
- Fig. 19: eine Draufsicht auf die erfindungsgemäße Vorrichtung gemäß Fig. 18,
- Fig. 19a: eine Vorderansicht der Vorrichtung gemäß Fig. 18b,
- Fig. 19b: die Vorrichtung gemäß Fig. 19 mit verstellter Plattform in Draufsicht,
- Fig. 20: eine weitere Ausführungsform eines Gelenkvierecks einer erfindungsgemäßen Vorrichtung in schematischer Darstellung.

Mit den im folgenden beschriebenen Vorrichtungen können räumliche Maschinenkinematiken gestaltet werden, um eine Plattform mit bis zu sechs Freiheitsgraden im Raum zu bewegen. Die Plattform kann ein Werkzeug- oder ein Werkstückträger einer Werkzeugmaschine sein. Es ist auch möglich, Werkzeugträger und Werkstückträger jeweils mit einer Kinematik zu bewegen.

Die Vorrichtungen werden aus Gelenkvierecken gebildet, die unterschiedlich gestaltet sein können.

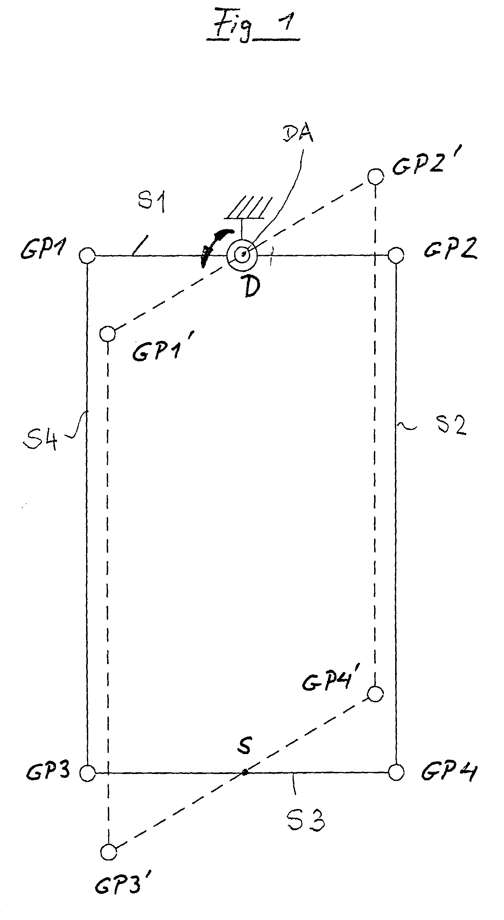

Fig. 1 zeigt ein derartiges Gelenkviereck mit vier rechtwinklig zueinander liegenden Stäben S1 bis S4, die an ihren Enden durch Gelenkpunkte GP1 bis GP4 miteinander verbunden sind. Die Winkellage des Gelenkviereckes in den Gelenkpunkten GP1 bis GP4 kann durch Antriebe verstellt werden. Hierfür ist ein Drehmotor D vorgesehen, der ortsfest, insbesondere maschinenfest, angeordnet ist und die Drehachse DA hat. Die Drehrichtung des Drehmotors D ist in Fig. 1 mit einem Doppelpfeil gekennzeichnet. Durch Drehen entgegen dem Uhrzeigersinn wird die in Fig. 1 durch eine gestrichelte Linie dargestellte Lage des Gelenkviereckes erreicht. Da die Stäbe S1 bis S4 gelenkig miteinander verbunden sind, können die Stäbe im erforderlichen Maße gegeneinander schwenken. Der Stab S3 ist hierbei durch eine nicht dargestellte, später jedoch näher beschriebene Plattform zwangsgeführt. Diese Zwangführung ist in Fig. 1 symbolisch mit S bezeichnet. In der verstellten Lage sind die Gelenkpunkte mit GP1' bis GP4' bezeichnet.

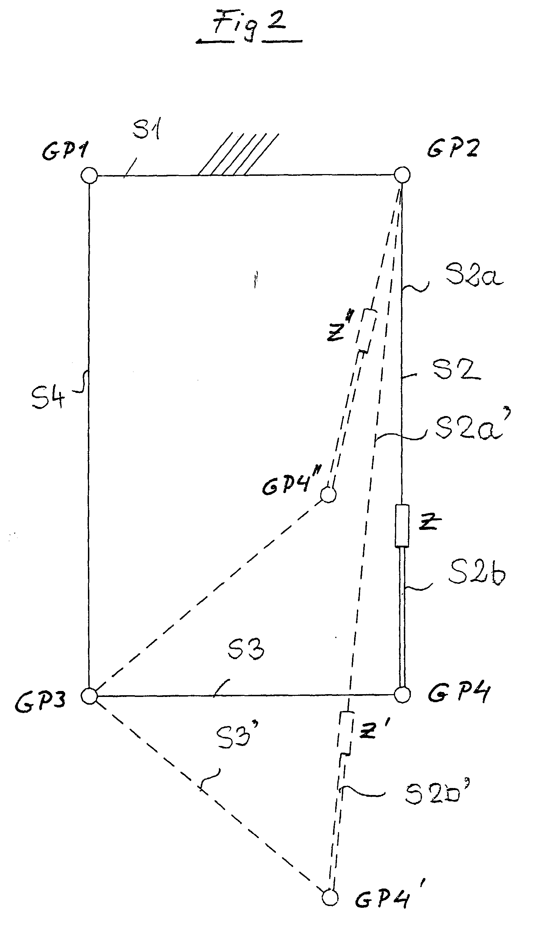

Bei der Ausführungsform nach Fig. 2 erfolgt die Veränderung der Winkellage des Gelenkviereckes mittels eines längenveränderlichen Stabes. Die Stäbe S1 bis S4 sind an ihren Enden über die Gelenkpunkte GP1 bis GP4 wieder gelenkig miteinander verbunden. Der Stab S1 ist hierbei ortsfest angeordnet. Im Stab S2 befindet sich ein Antrieb Z, mit dem die Länge des Stabes S2 verändert werden kann. Als Antrieb Z kann eine Kolben-Zylinder-Einheit, eine Kugelrollspindel und dergleichen vorgesehen sein. In diesem Falle besteht der Stab S2 aus gegeneinander verstellbaren Stabteilen S2a und S2b.

In Fig. 2 sind zwei unterschiedliche Lagen des Gelenkviereckes mit gestrichelten Linien dargestellt. Wird der Antrieb Z so betätigt, daß die Länge des Stabes S2 vergrößert wird, gelangt der Antrieb in die Lage Z'. Hierbei ist der Stabteil S2a gegenüber dem Stab S1 um den Gelenkpunkt GP2 verschwenkt worden, so daß er nunmehr die Lage S2a' einnimmt. Auch die Winkellage des Stabes S3 hat sich durch die Längenveränderung des Stabes S2 geändert. Der Stab S3 wird um den Gelenkpunkt GP3 im Raum verstellt, wobei der Gelenkpunkt GP4 in die Lage GP4' gelangt.

Wird der Antrieb Z so betätigt, daß die Länge des Stabes S2 verkürzt wird, dann nimmt der Antrieb die Lage Z'' ein. Da sich der Stab S2 verkürzt hat, muß der Stab S3 um den Gelenkpunkt P3 sowie um den Gelenkpunkt P4 relativ schwenken. Im angenommenen Anwendungsfall bleibt der Gelenkpunkt GP3 ortsfest, so daß bei der konstanten Länge des Stabes S3 der Gelenkpunkt GP4 beim Verkürzen des Stabes S2 in die räumliche Lage GP4'' und beim Verlängern des Stabes S2 in die räumliche Lage GP4' verstellt wird. Der Stab S1 ist bei diesem Ausführungsbeispiel wiederum ortsfest angeordnet.

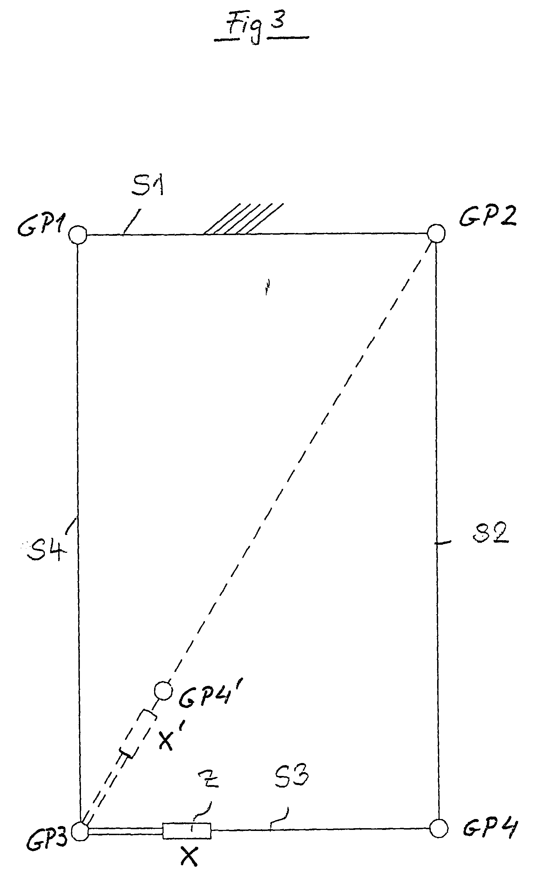

Fig. 3 zeigt ein Ausführungsbeispiel eines Gelenkviereckes, bei dem der Antrieb Z im Stab S3 vorgesehen ist, so daß dessen Länge verändert werden kann. Der Stab S1 ist wiederum gestell- bzw. ortsfest angeordnet. In Fig. 3 ist mit gestrichelten Linien eine Lage dargestellt, wenn mit dem Antrieb Z die Länge des Stabes S3 verändert wird. Da wie beim vorigen Ausführungsbeispiel die anderen Stäbe längenunveränderlich sind, wird die räumliche Lage des Gelenkpunktes GP4 sowie der Stäbe S2 und S3 entsprechend verändert.

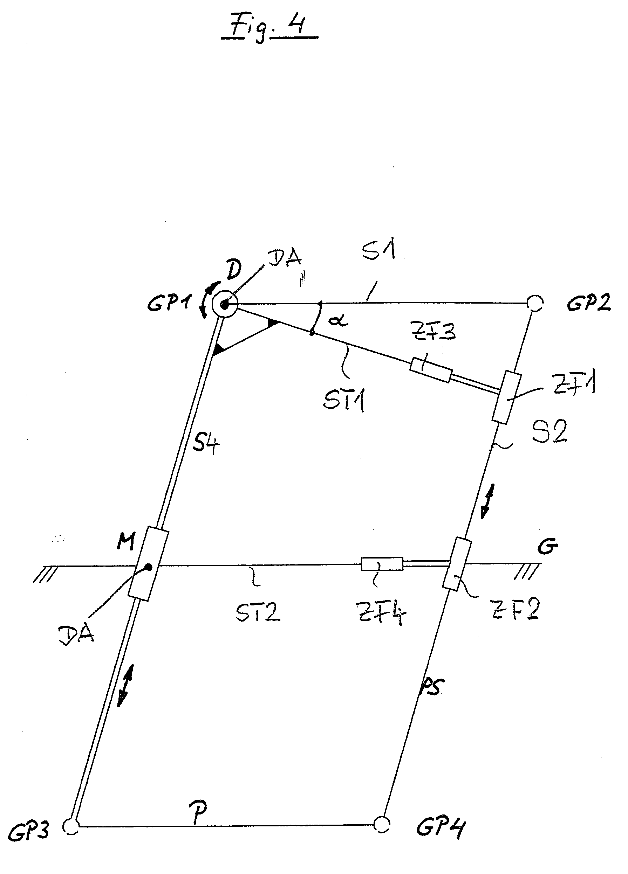

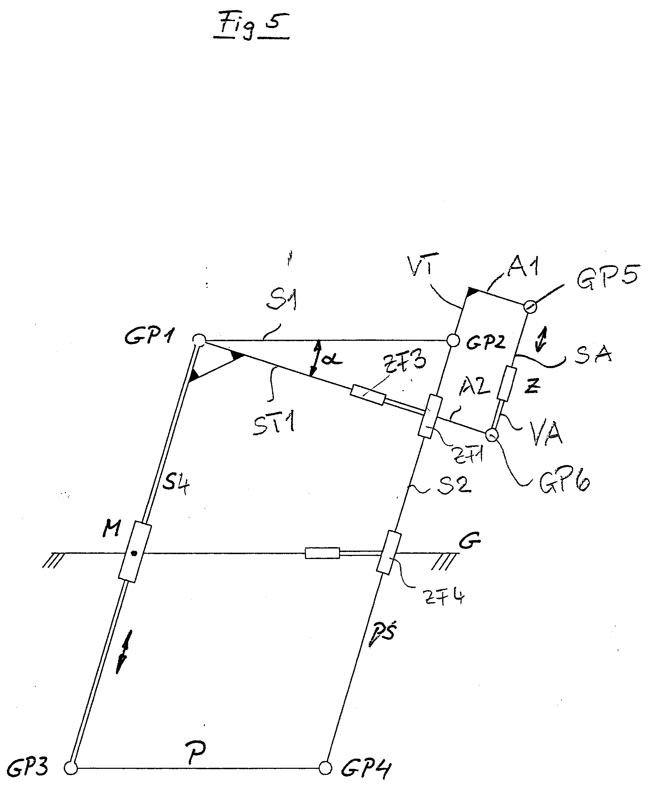

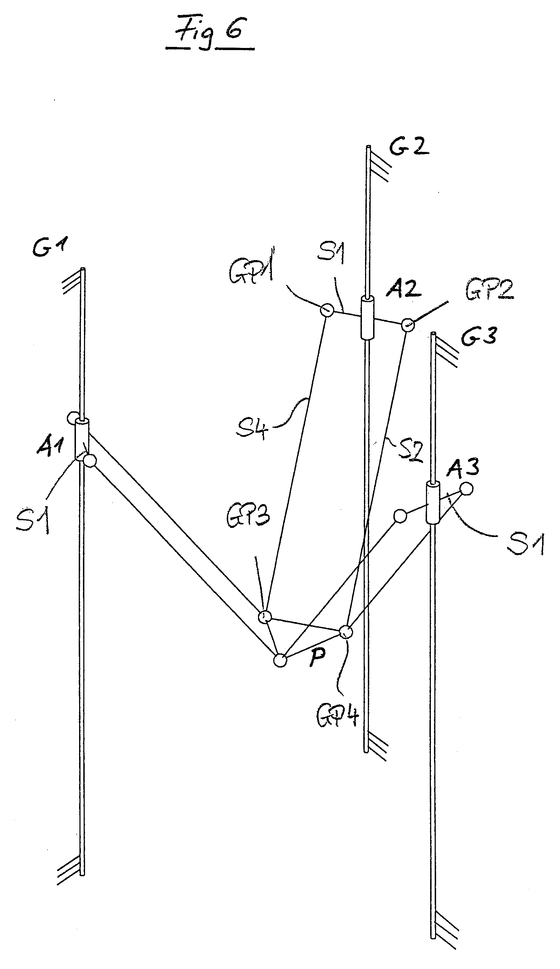

Werden die beschriebenen Gelenkvierecke innerhalb der noch zu beschreibenden Vorrichtung eingesetzt, dann ist anstelle des Stabes S3 die Plattform P vorgesehen. Sofern deren Position durch eine Längenveränderung der Stäbe erfolgt, bietet sich eine Anordnung nach Fig. 4 oder Fig. 5 an.

Die Längenänderung des positionsbestimmenden Stabes S4 erfolgt bei der Ausführungsform nach Fig. 4 durch einen Motor M, der am Gestell G um die Achse DA drehbar gelagert ist. Der Stab S4 ist über den Gelenkpunkt GP1 mit dem Stab S1 verbunden. Sein Ende ist über den Gelenkpunkt GP2 mit dem Stab S2 verbunden, der am anderen Ende über den Gelenkpunkt GP4 mit der Plattform P verbunden ist, an der über den Gelenkpunkt GP3 auch der Stab S4 angelenkt ist. Der Stab S2 kann mit dem Drehmotor D um einen Winkel Á in die richtige Parallelposition zum Stab S4 zwanggeführt werden. Hierfür ist der Stab S2 in zwei Zwangführungen ZF1 und ZF2 geführt, die jeweils als Hülsen ausgebildet sind. Die Zwangführung ZF1 sitzt auf einem Stab ST1, der senkrecht zum Stab S4 geführt ist. Auf diesem Stab ST1 stützt sich der Drehantrieb D ab. Der Stab ST1 ist winkelfest mit dem Stab S4 ausgebildet, der im Ausführungsbeispiel als Spindel ausgebildet ist. Wird der Motor M betätigt, dann wird der Stab S4 in Richtung des Doppelpfeiles in Fig. 4 in seiner Achsrichtung verschoben. Für den Stab ST1 ist eine weitere Zwangführung ZF3 vorgesehen, die vorzugsweise als Hülse ausgebildet und starr mit der Zwangführung ZF1 verbunden ist. Die Achsen der beiden Zwangführungen ZF1 und ZF3 liegen in einer Ebene und senkrecht zueinander.

Auch die Zwangführung ZF2 ist mit einer weiteren Zwangführung ZF4 fest verbunden, die über einen Stab ST2 mit dem Motor M verbunden ist. Die Achse der Zwangführung ZF4, die ebenfalls hülsenförmig ausgebildet ist, liegt unter einem von 90° abweichenden Winkel zur Achse der Zwangführung ZF2.

Wird mit dem Drehmotor D der Stab S1 um die Drehachse DA, die senkrecht zum Stab S4 liegt, geschwenkt, dann wird durch die Zwangführungen ZF1, ZF2 gewährleistet, daß der Stab S2 parallel zum Stab S4 bleibt. Da beim Verschwenken des Stabes S1 jedoch der Abstand zwischen den zueinander parallelen Stäben S2 und S4 verändert wird, können die Stäbe ST1 und ST2 in die Zwangführungen ZF3 und ZF4 einfahren bzw. aus ihnen herausfahren. Der Motor M, der am Gestell G drehbar gelagert ist, kann um die Drehachse DA verschwenken, die parallel zur Drehachse DA des Drehmotors D liegt.

Infolge der Verschwenkung des Stabes S1 mittels des Drehantriebes D wird die Plattform P in eine gewünschte Lage verstellt, die sich aus der Summe der Drehlagen des Stabes S4 zum Grundgestell G und der gewünschten Verdrehung der Plattform P zum Grundgestell G ergibt.

Der Motor M kann eine Kolben-Zylinder-Einheit, eine Kugelrollspindel oder dergleichen sein.

Bei der Ausführungsform nach Fig. 5 dient zum Verschwenken des Stabes S1 nicht ein Drehantrieb wie bei der vorigen Ausführungsform, sondern ein Linearantrieb Z. Er ist in einem Nebenzweig des Gelenkviereckes vorgesehen. Der Stab S2 ist über den Gelenkpunkt GP2 hinaus verlängert. An diesem verlängerten Teil VT ist das eine Ende eines Armes A1 starr befestigt, dessen anderes Ende über einen Gelenkpunkt GP5 mit einem Stellarm SA gelenkig verbunden ist, in dem der Antrieb Z sitzt. Dieser Stellarm SA kann die Kolbenstange des als Kolben-Zylinder-Einheit ausgebildeten Antriebes Z sein. Durch Ein- und Ausfahren dieses Stellarmes SA wird über den Arm A1 der Stab S2 in seiner Längsrichtung entsprechend verschoben.

Der Antrieb Z sitzt auf einem Verbindungsarm VA, der über einen Gelenkpunkt GP6 mit einem Arm A2 gelenkig verbunden ist, welcher starr an der Zwangführung ZF3 befestigt ist. Der Arm A2 liegt in Verlängerung des Stabes ST1. Im übrigen ist das Gelenkviereck gleich ausgebildet wie das Ausführungsbeispiel nach Fig. 4.

Durch Ein- bzw. Ausfahren des Stellarmes SA wird der Stab S1 um den Gelenkpunkt GP1 um den gewünschten Winkel Á geschwenkt. Die Zwangführungen ZF1 und ZF2 sorgen wie beim vorigen Ausführungsbeispiel dafür, daß der Stab S2 parallel zum Stab S4 liegt. Im übrigen kann auf die Funktionsweise dieses Gelenkviereckes auf die Ausführungen zum Ausführungsbeispiel nach Fig. 4 verwiesen werden.

Der Antrieb Z stützt sich ebenfalls auf dem Stab ST1 ab, der senkrecht zum Stab S4 liegt und starr mit ihm verbunden ist. Beide Stäbe ST1 und S4 sind mittels des Gelenkpunktes GP1 schwenkbar, wenn der Stab S1 mittels des Antriebes Z um den gewünschten Winkel Á geschwenkt wird. Der Antrieb Z ist ebenfalls am Stab ST1, der senkrecht zum Stab S4 liegt, abgestützt. Auch bei dieser Ausführungsform ergibt sich die Lage der Plattform P aus der Summe der Drehlagen des Stabes S4 zum Grundgestell G und der gewünschten Verdrehung der Plattform P zum Grundgestell G.

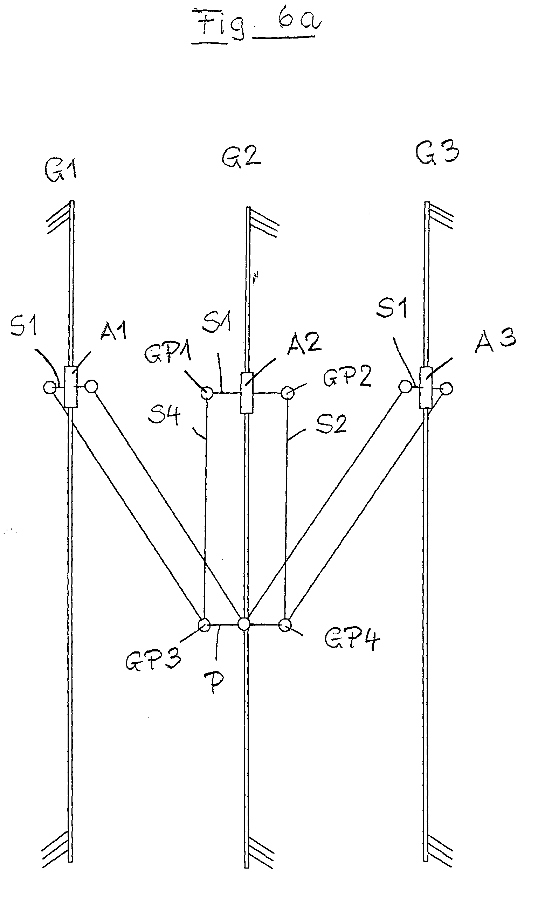

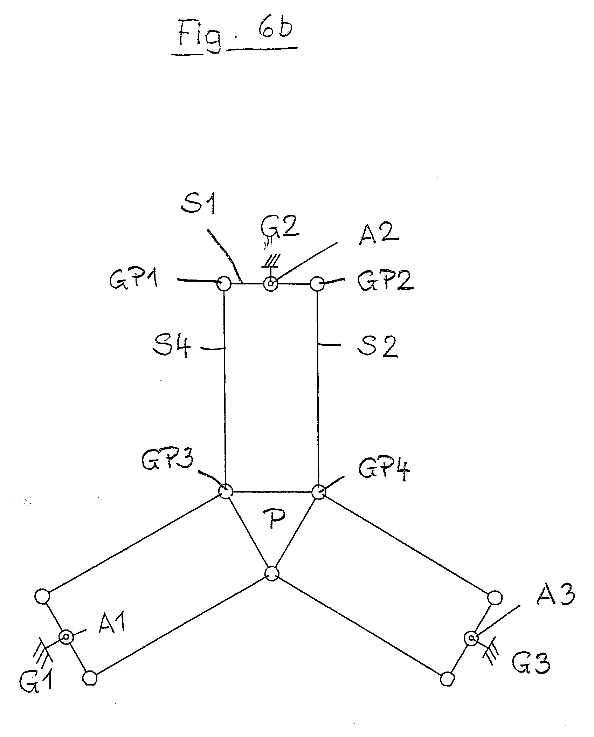

Fig. 6 zeigt nun eine Vorrichtung, bei der drei Gelenkvierecke vorgesehen sind, um die Plattform P in jede gewünschte Raumlage zu verstellen. Diese Gelenkvierecke sind entsprechend Fig. 1 ausgebildet. Jedes Gelenkviereck ist mit einem Linearantrieb A1 bis A3 längs jeweils einer gestellfesten Linearführung G1 bis G3 verschiebbar. Die Linearführungen G1 bis G3 liegen parallel zueinander. Die Linearführungen G1 bis G3 können selbstverständlich auch winklig zueinander liegen. Dies gilt auch für die weiteren Ausführungsformen. An jedem Linearantrieb A1 bis A3 ist jeweils ein Stab S1 jedes Gelenkviereckes um seine Achse drehbar gelagert. Wie anhand von Fig. 1 beschrieben worden ist, ist jeder Stab S1 über die Gelenkpunkte GP1 und GP2 an seinen Enden gelenkig mit den Stäben S2 und S4 verbunden, die über die Gelenkpunkte GP3 und GP4 gelenkig mit der Plattform P verbunden sind. Die benachbart zueinander liegenden Gelenkvierecke sind jeweils über zwei Gelenkpunkte mit der Plattform P verbunden. In Fig. 6 ist der Einfachheit halber für benachbarte Gelenkvierecke ein gemeinsamer Gelenkpunkt gezeichnet.

Die Gelenkpunkte GP1 bis GP3 sind Kugelgelenke, so daß die Stäbe jede gewünschte Lage relativ zueinander einnehmen können.

Die Linearführungen G1 bis G3 sind vorteilhaft dreieckförmig zueinander angeordnet. Je nach gewünschter Raumlage der Plattform P wird mindestens ein Linearantrieb längs der zugehörigen Linearführung verschoben. Wird beispielsweise der Linearantrieb A1 längs der Linearführung G1 in Fig. 6 nach unten verschoben, während die Linearantriebe A2, A3 ihre gezeichnete Lage beibehalten, dann wird die Plattform P entsprechend um die Gelenkpunkte mit den den Linearantrieben A2, A3 zugeordneten Gelenkvierecken geschwenkt. Auf diese Weise können auch zwei oder alle drei Linearantriebe verschoben werden, um die Plattform P in die gewünschte Raumlage zu verstellen.

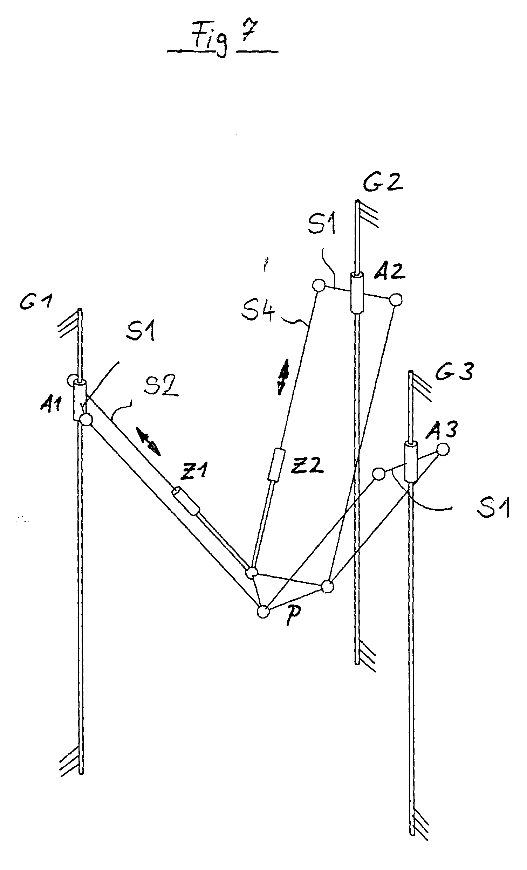

Bei der Vorrichtung gemäß Fig. 7 werden ein Gelenkviereck entsprechend Fig. 1 und zwei Gelenkvierecke entsprechend Fig. 2 eingesetzt. Die Vorrichtung hat wiederum die parallel zueinander liegenden gestellfesten Linearführungen G1 bis G3, auf denen jeweils ein Linearantrieb A1 bis A3 verschiebbar ist. Die drei Gelenkvierecke tragen die Plattform P, die gelenkig mit den Gelenkvierecken verbunden ist. Wie bei der vorigen Ausführungsform sind an den Linearantrieben A1 bis A3 die Stäbe S1 um ihre Achse drehbar gelagert. Das dem Linearantrieb A1 zugeordnete Gelenkviereck weist im Stab S2 den Antrieb Z1 auf, mit dem die Länge des Stabes S2 in der beschriebenen Weise verändert werden kann. Im Stab S4 des dem Linearantrieb A2 zugehörigen Gelenkviereckes sitzt der Antrieb Z2, mit dem die Länge des Stabes S4 verändert werden kann. Durch gezielte Längenveränderung der Stäbe S2 bzw. S4 kann die Neigungslage der Plattform P in der gewünschten Weise verändert werden. Darüber hinaus kann die Lage der Plattform P im Raum auch durch Verschieben der Linearantriebe A1 bis A3, gegebenenfalls in Kombination mit der Längenveränderung mindestens des einen Stabes S2 oder S4, vorgenommen werden. Die Vorrichtung nach Fig. 7 stellt eine vierachsige Einheit dar. In Fig. 7 ist die Plattform P in einer horizontalen Lage angeordnet.

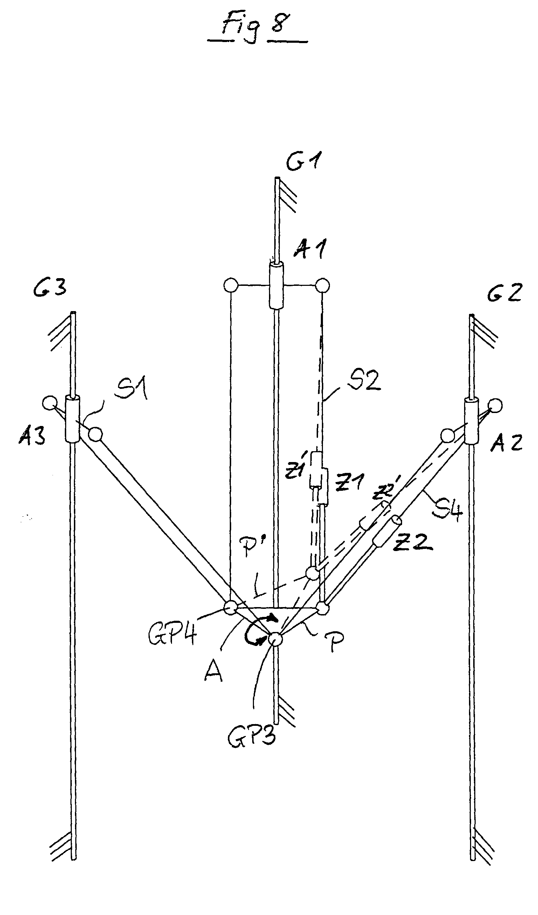

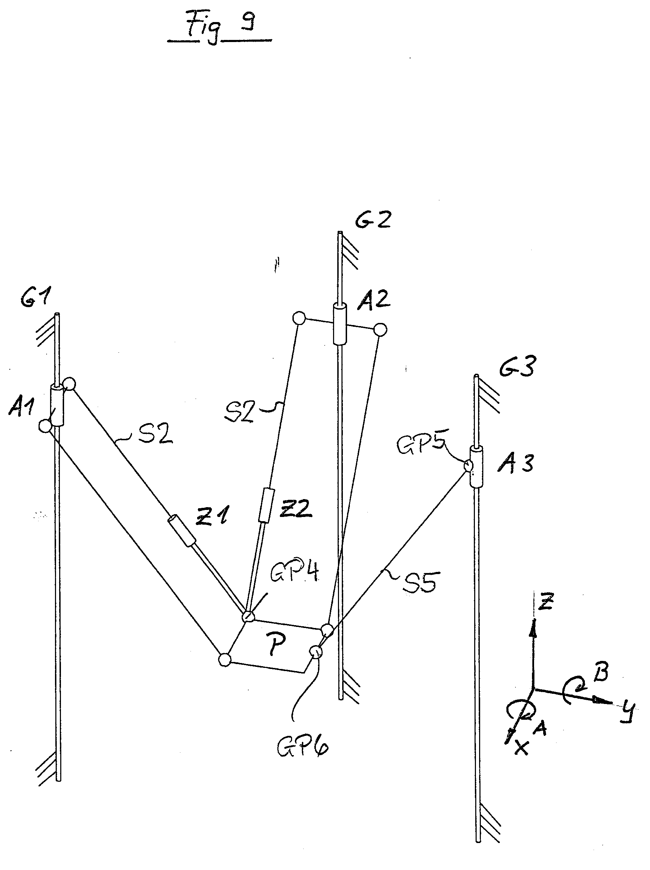

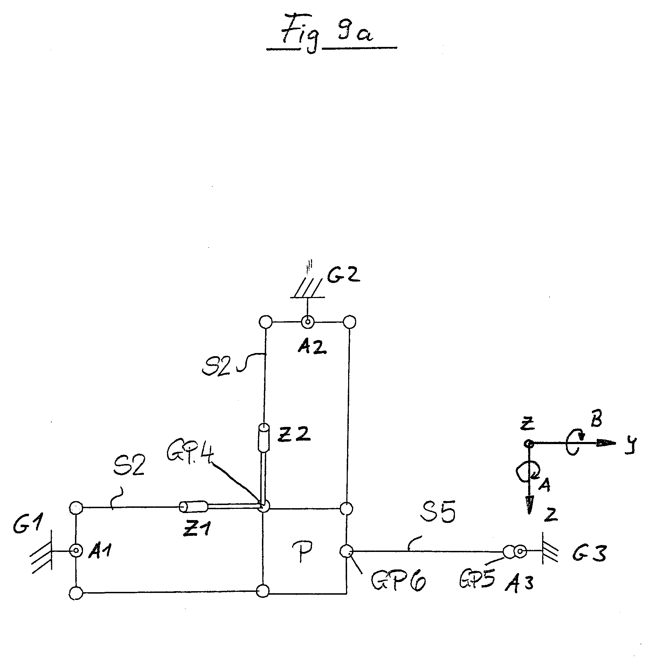

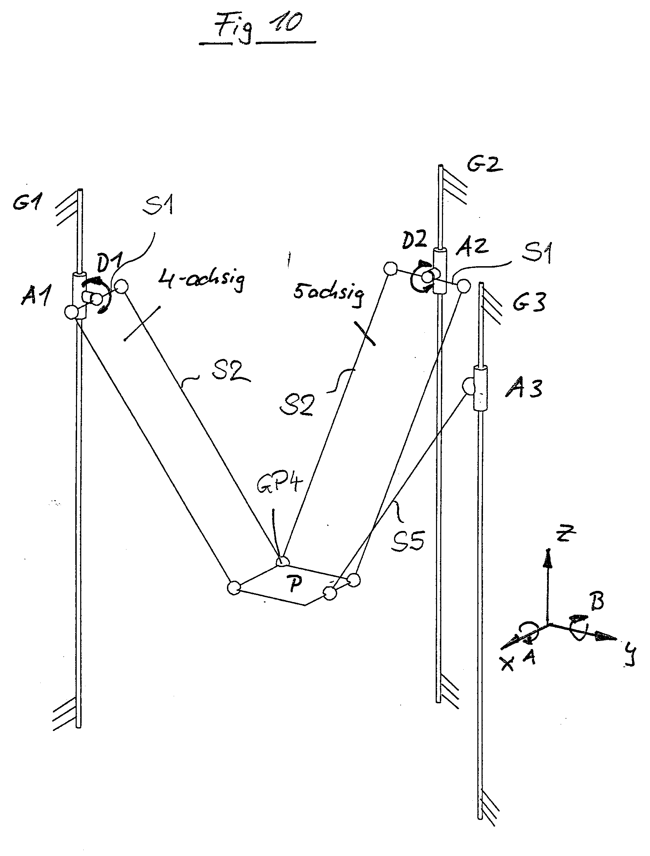

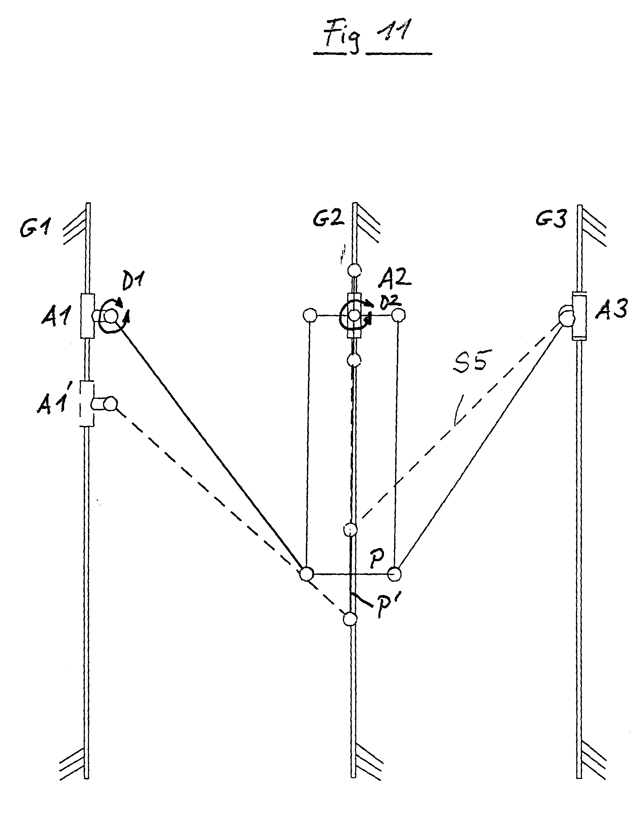

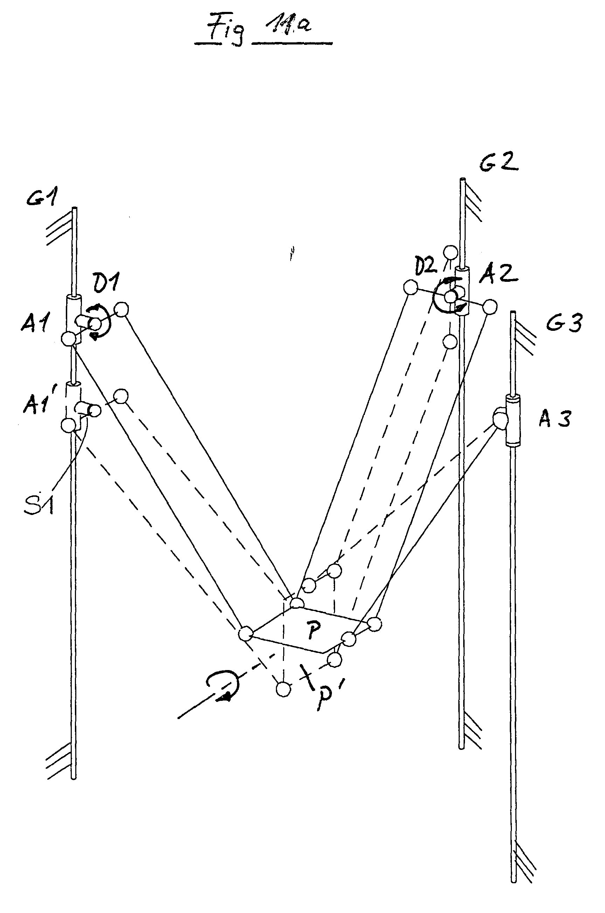

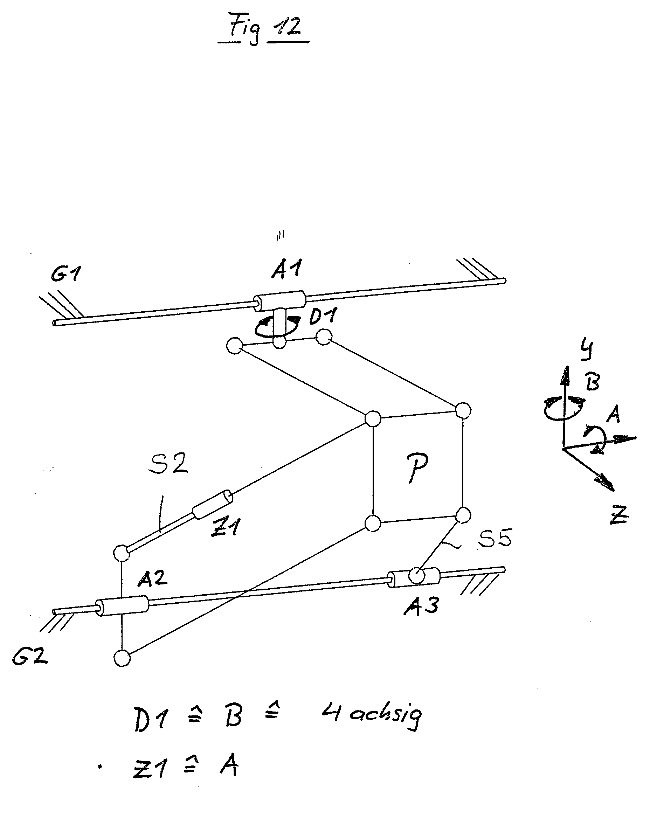

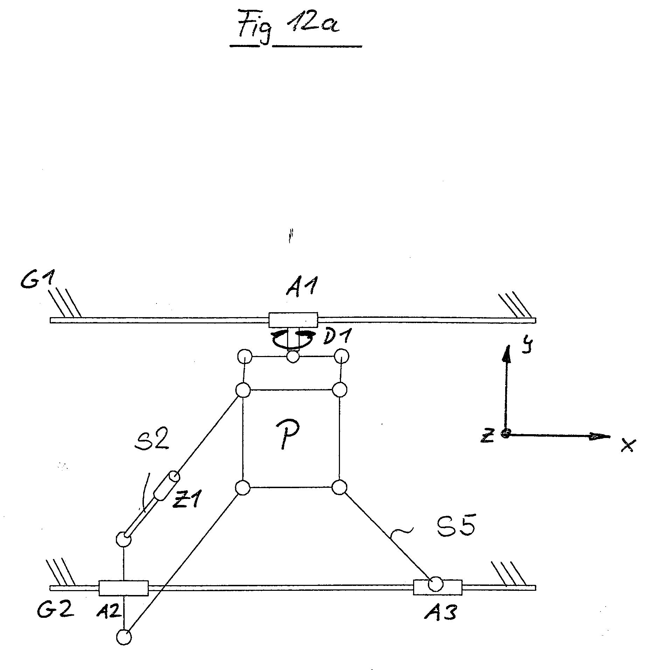

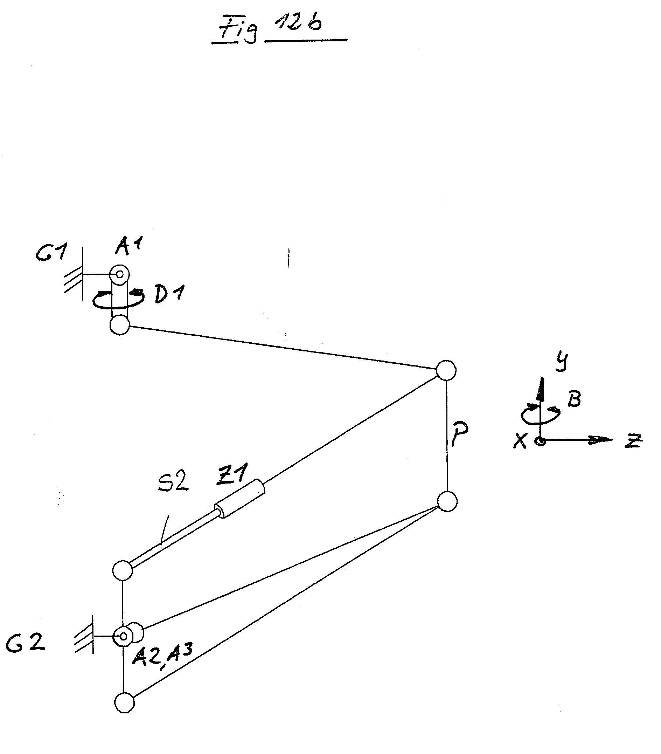

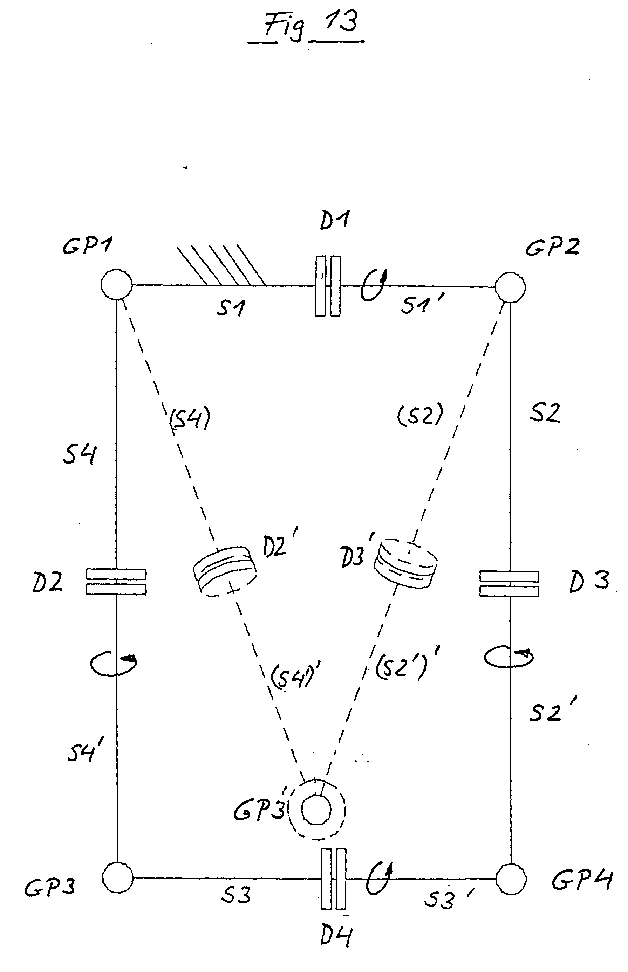

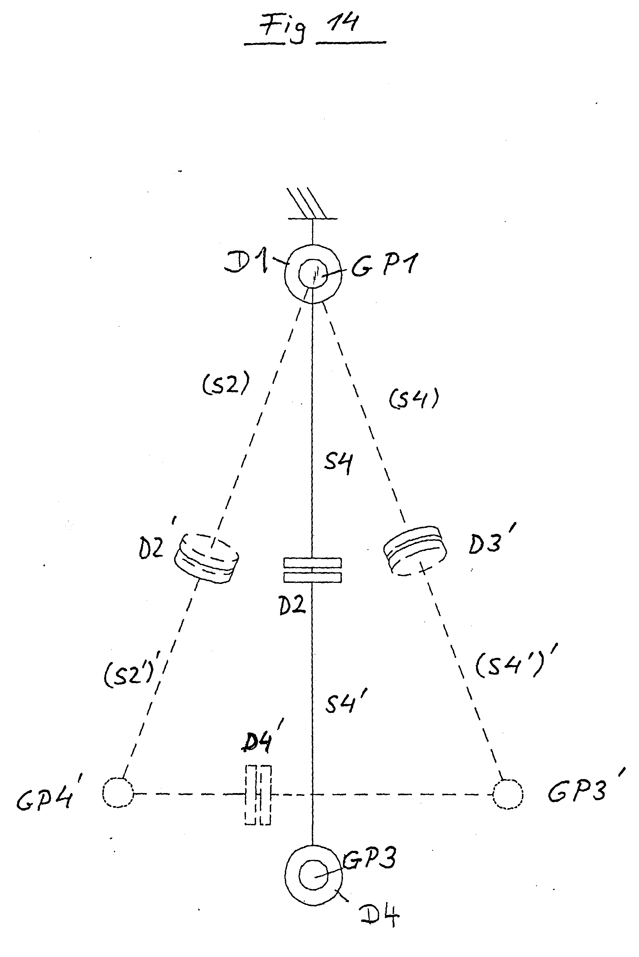

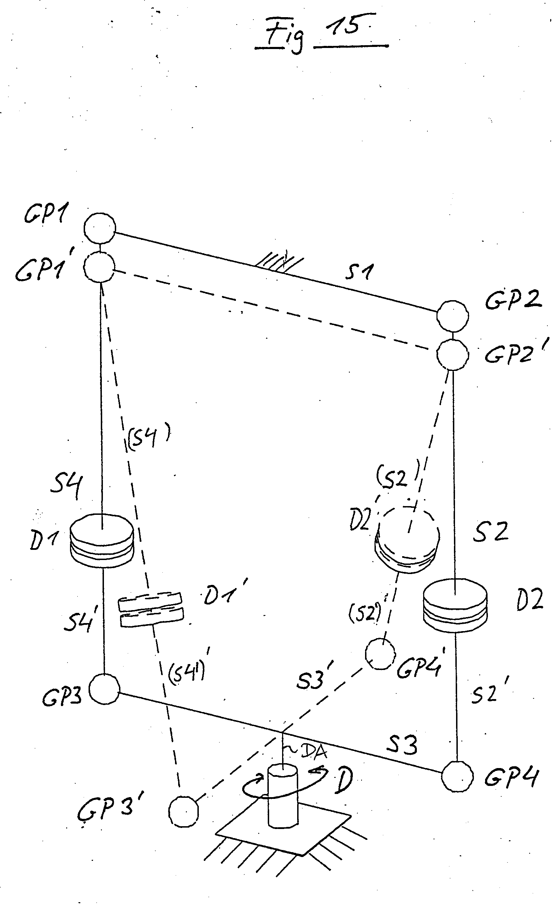

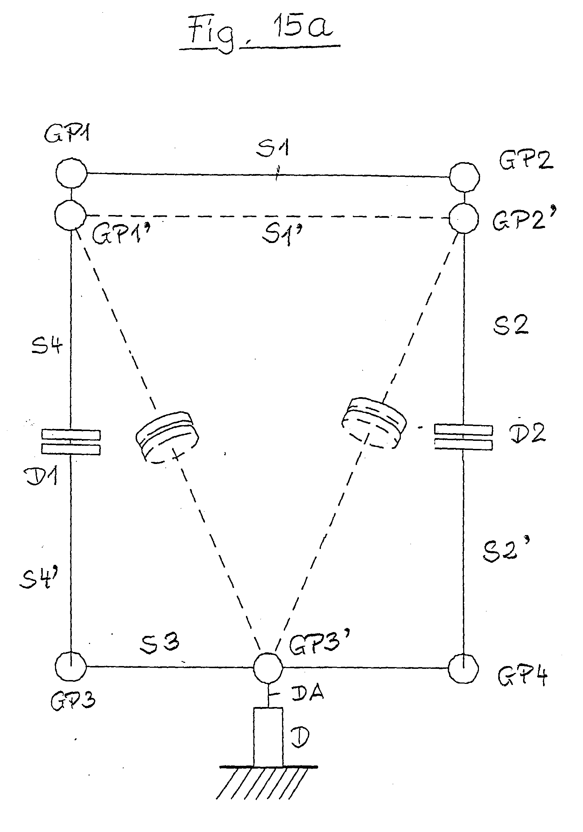

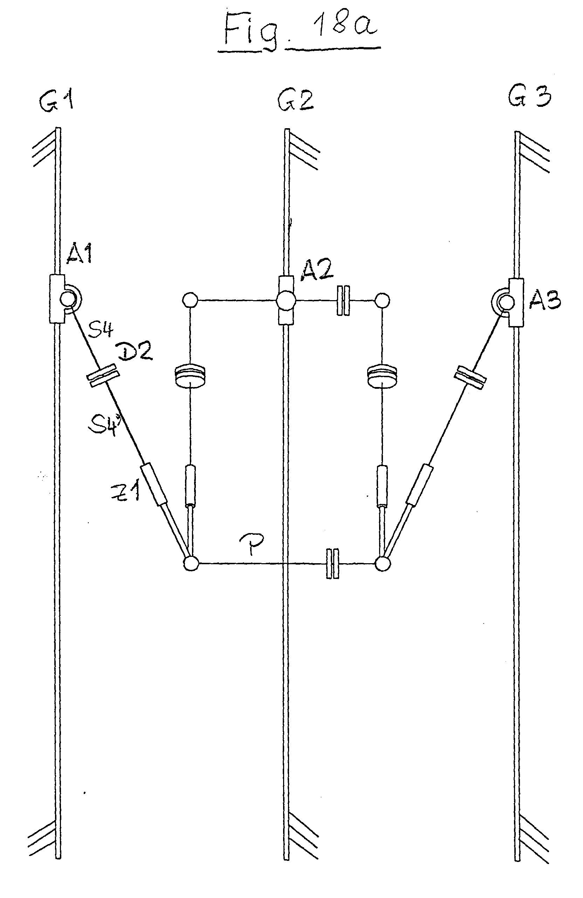

In Fig. 8 hat die mit ausgezogenen Linien dargestellte Vorrichtung die gleiche Lage wie in Fig. 7. Mit gestrichelten Linien ist die Lage dargestellt, wenn die Länge der Stäbe S2 und S4 mittels der motorisch verstellbaren Antriebe Z1 und Z2 verändert worden ist. Mit dem Motor Z1 ist der Stab S2 verkürzt worden, so daß die Plattform P an der zugehörigen Anlenkseite angehoben wird. Auch die Länge des Stabes S4 ist mit dem Antrieb Z2 entspreFig. 14 zeigt das Gelenkviereck gemäß Fig. 13 in Seitenansicht. Mit ausgezogenen Linien ist wiederum die Ausgangslage dargestellt, während mit gestrichelten Linien diejenige Lage des Gelenkviereckes gekennzeichnet ist, die sich beim Verdrehen mittels des Drehantriebes D1 im Stab S1/S1' ergibt.

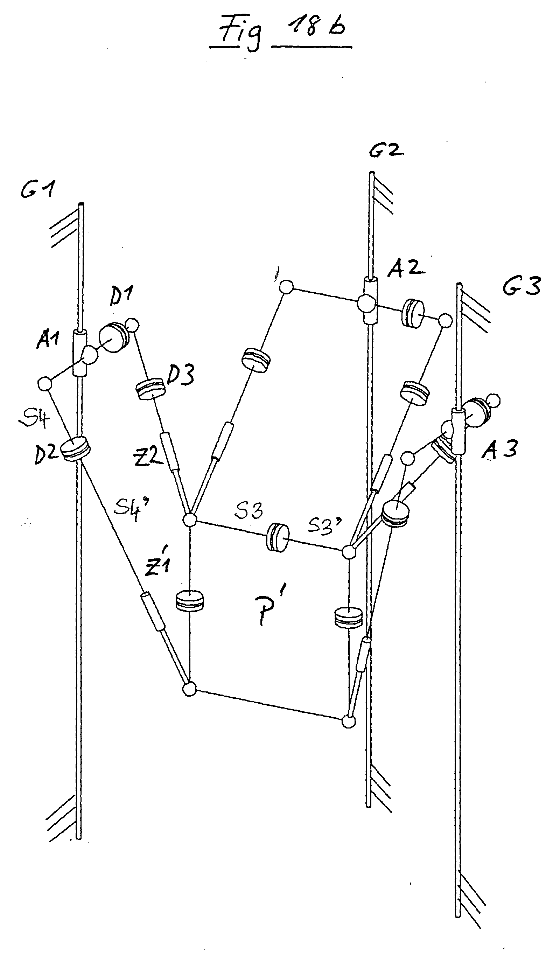

Bei der Ausführungsform nach Fig. 15 sind die parallel zueinander liegenden Stäbe S2/S2' und S4/S4' jeweils mit einem Drehantrieb D2, D1 versehen. Der Stab S1, der an seinen Enden die Gelenkpunkte GP1 und GP2 aufweist, ist parallel zum Stab S3 angeordnet, der über die Gelenkpunkte GP3 und GP4 in der beschriebenen Weise gelenkig mit den angrenzenden Stäben S4/S4' und S2/S2' verbunden ist. Der Stab S3 sitzt auf einer senkrecht zu ihm verlaufenden Welle eines Drehantriebes D, der gestellfest angeordnet ist. Die Drehachse DA des Drehantriebes D liegt in halber Breite des Stabes S3. Mit dem Drehantrieb D kann der Stab S3 um die Achse DA gedreht werden. Dadurch wird das Gelenkviereck aus seiner mit ausgezogenen Linien bestimmten Bewegungsebene herausgedreht. In den Fig. 15 und 15a ist der Stab S3 so weit mit dem Drehantrieb D gedreht worden, daß er senkrecht zu seiner Ausgangslage liegt. Da der Drehantrieb D gestellfest ist, wird der gegenüberliegende Stab S1 translatorisch in die Stellung S1' verschoben. Infolge der Drehung des Stabes S3 ändern auch die Stäbe S2/S2' und S4/S4' ihre Raumlage, wie durch die gestrichelten Linien in den Fig. 15 und 15a angegeben ist. Mit den Drehantrieben D1, D2 können darüber hinaus die Stabteile S4' und S2' in der beschriebenen Weise gegenüber dem Stabteil S4, S2 um ihre Achsen gedreht werden.

Der Drehantrieb D, der eine Orientierungsänderung durch die Änderung der Winkellage in den Gelenkpunkten erzeugt, kann auch an einem der anderen Stäbe des Gelenkviereckes vorgesehen sein.

Bei den beschriebenen Ausführungsformen der Gelenkvierecke nach den Fig. 13, 15 und 16 ist die Orientierung des Stabes S3/S3' zu S1/S1' bzw. S1 zu S3 jeweils in einem Freiheitsgrad zwanggeführt. Diese Zwangführung kann durch einen zusätzlichen Freiheitsgrad verhindert werden, so daß beliebige Orientierungen zwischen den Stäben S1/S1' und S3/S3' bzw. S1 und S3 eingestellt werden können. Hierzu ist mindestens ein aktives Schubgelenk Z1 zum Beispiel in den Stab S4/S4' zu integrieren. Es können aber auch zwei zusätzliche aktive Schubgelenke Z1 und Z2 in die Stäbe S4/S4' und S2/S2' integriert werden.

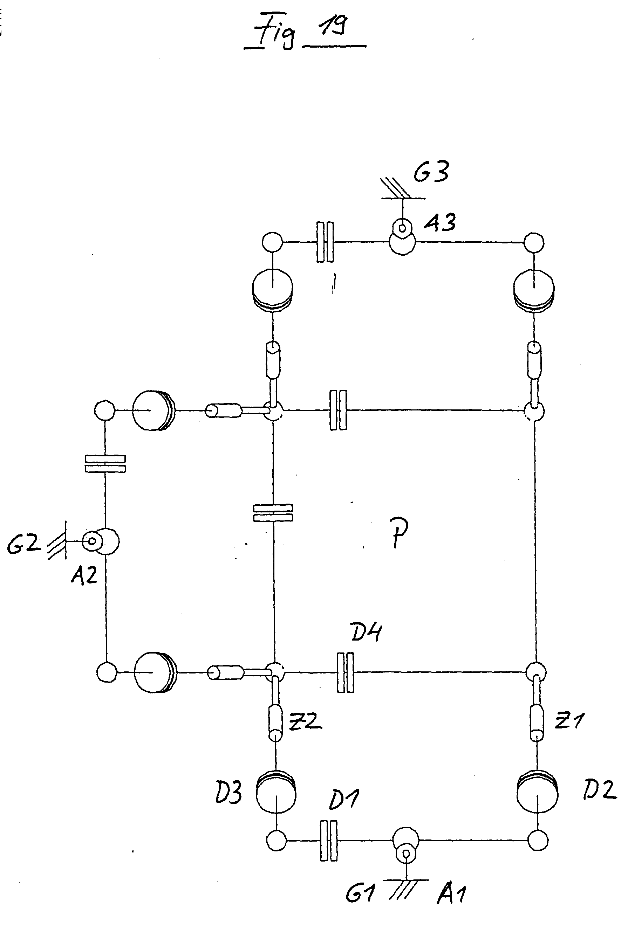

Die Fig. 16 und 16a zeigen ein Gelenkviereck, bei dem in den zueinander parallelen Stäben S4/S4' und S2/S2' jeweils ein Drehantrieb D1, D2 sitzt. Mit ihnen können die Stabteile S4' und S2' rotatorisch angetrieben werden. Dadurch wird beispielsweise der Stab S3 aus seiner mit ausgezogenen Linien dargestellten Ausgangslage in die mit gestrichelten Linien angedeutete verstellte Lage S3' geschwenkt. Während beim Ausführungsbeispiel nach Fig. 15, 15a das Gelenkviereck mittels des zusätzlichen Drehantriebes D aus seiner ursprünglichen Bewegungsebene herausgedreht wird, ist bei der Ausführungsform nach den Fig. 16, 16a zum Herausdrehen des Gelenkviereckes aus der ursprünglichen Bewegungsebene (ausgezogene Linien) vorgesehen, die Stabteile S2' und S4' mittels der Drehantriebe D1, D2 zu drehen. Einer der beiden Drehantriebe D1, D2 ist aktiv, d.h. mit ihm wird die Drehbewegung erzeugt. Der andere Drehantrieb ist lediglich passiv, d.h. er ist als Drehgelenk ausgebildet.

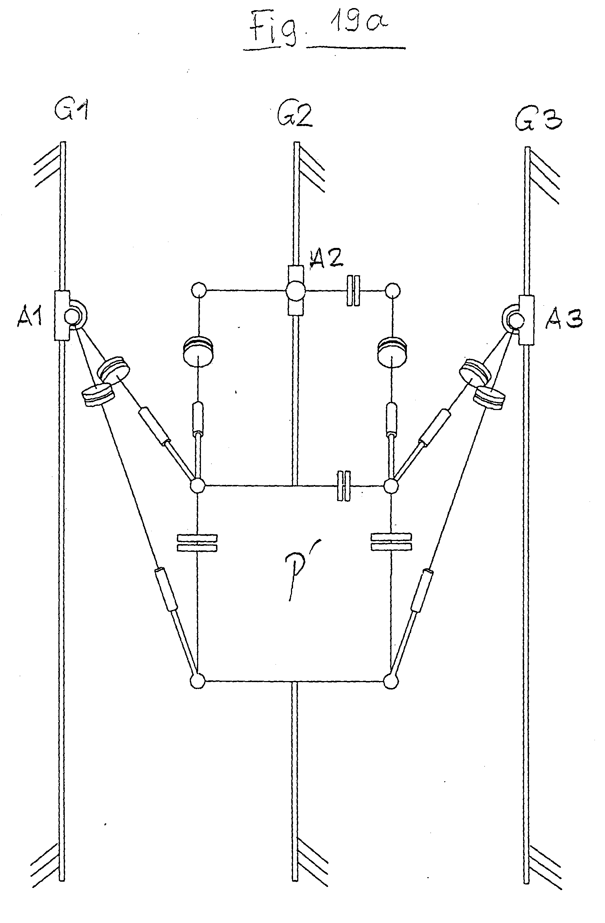

In Fig. 17 ist das Gelenkviereck nach Fig. 16, 16a dargestellt, bei dem zwei zusätzliche aktive Schubgelenke Z1 und Z2 in die Stäbe S2/S2' und S4/S4' integriert sind. Mit den aktiven Schubgelenken Z1, Z2 wird in der beschriebenen Weise die Länge des jeweiligen Stabes S2/S2' und S4/S4' verändert. Mit den in diesen Stäben befindlichen Drehantrieben D1, D2 kann zusätzlich der Stabteil S2', S4' um seine Achse gedreht werden. In Fig. 17 ist mit gestrichelten Linien der Fall dargestellt, daß mit dem aktiven Schubgelenk Z1 die Länge des Stabelementes S2/S2' vergrößert worden ist. Dadurch ändert sich die Winkellage der Stäbe S3 und S2/S2' in der angegebenen Weise. Werden solche Gelenkvierecke in einer Vorrichtung eingesetzt, wird durch diese Ausbildung das Systemverhalten wesentlich verbessert.

Die Schubgelenke Z1, Z2 können Kolben-Zylinder-Einheiten, Spindel-Mutter-Systeme und dergleichen sein.

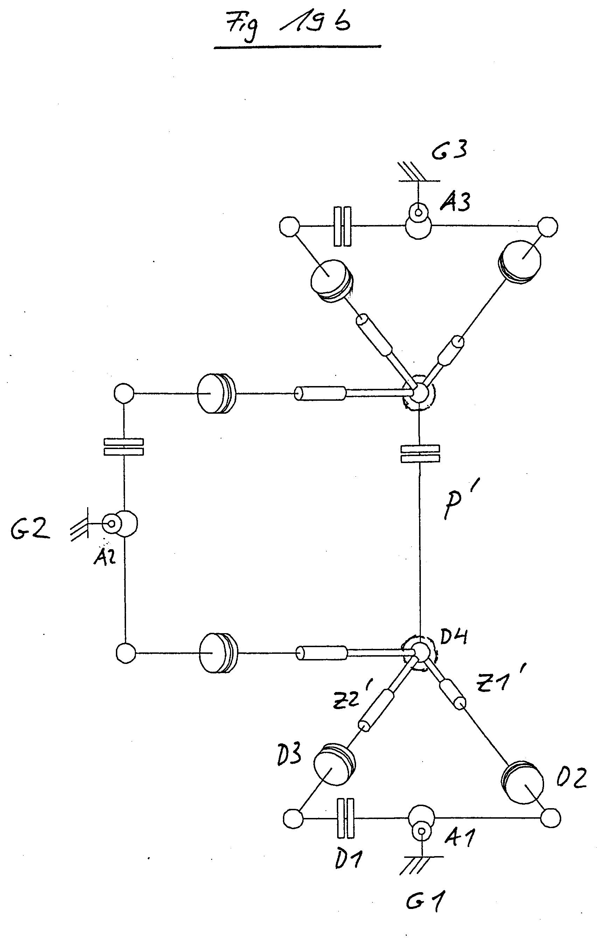

Fig. 18 zeigt ein Ausführungsbeispiel einer Vorrichtung, welche Gelenkvierecke entsprechend Fig. 13 aufweist, wobei in die Stäbe S2/S2' und S4/S4' jeweils ein Schubgelenk Z1, Z2 integriert ist. Die Vorrichtung hat die zueinander parallelen gestellfesten Linearführungen G1 bis G3, auf denen jeweils ein Linearantrieb A1 bis A3 verstellbar angeordnet ist. Mit den Linearantrieben A1 bis A3 erfolgt die Positionierung der Plattform P.

Die drei den Linearantrieben A1 bis A3 zugeordneten Gelenkvierecke sind jeweils gleich ausgebildet, so daß im folgenden nur das dem Linearantrieb A1 zugeordnete Gelenkviereck beschrieben wird. Es hat den Stab S1/S1', der senkrecht zur Linearführung G1 liegt und drehbar im Linearantrieb A1 gelagert ist. Mit dem Drehantrieb D1 kann der Stabteil S1' um seine Achse gegenüber dem Stabteil S1 in der beschriebenen Weise gedreht werden. An seinen Enden ist der Stab S1/S1' in der beschriebenen Weise gelenkig mit den Stäben S2/S2' und S4/S4' verbunden, in denen ebenfalls jeweils ein Drehantrieb D3 bzw. D2 liegt. Mit ihnen können die Stabteile S4' und S2' um ihre Achsen gegenüber den anderen Stabteilen S4 und S2 gedreht werden. Parallel zum Stab S1/S1' liegt der Stab S3/S3', der die zueinander Parallelen Stäbe S2/S2' und S4/S4' gelenkig miteinander verbindet. Auch in diesem Stab S3/S3' sitzt der Drehantrieb D4, mit dem der Stabteil S3' gegenüber dem Stabteil S3 um seine Achse gedreht werden kann.

In den Stäben S2/S2' und S4/S4' sitzt außerdem jeweils ein aktives Schubgelenk Z1, Z2. Mit ihnen kann die Länge der Stäbe S2/S2' und S4/S4' in der beschriebenen Weise verändert werden. Mit den Drehantrieben D1 bis D4 und den Schubgelenken Z1, Z2 kann die Plattform P in die erforderliche Orientierungslage verstellt werden. Die Plattform P ist gelenkig mit den Gelenkvierecken der Vorrichtung verbunden.

Fig. 18b zeigt beispielhaft eine verstellte Lage der Plattform P. Mit den aktiven Schubgelenken Z1, Z2 in den verschiedenen Gelenkvierecken ist die Plattform P aus der horizontalen Lage gemäß den Fig. 18 und 18a in eine senkrechte Lage geschwenkt worden. Die Schwenkachse wird hierbei durch den Stab S3/S3' des dem Linearantrieb A2 zugehörigen Gelenkviereckes bestimmt. Mit den verschiedenen aktiven Schubgelenken läßt sich somit die Plattform in jede erforderliche Raumlage bezüglich ihrer Orientierung einstellen. Die Stäbe der Gelenkvierecke können hierbei die erforderlichen Dreh- und Schwenkbewegungen ausführen.

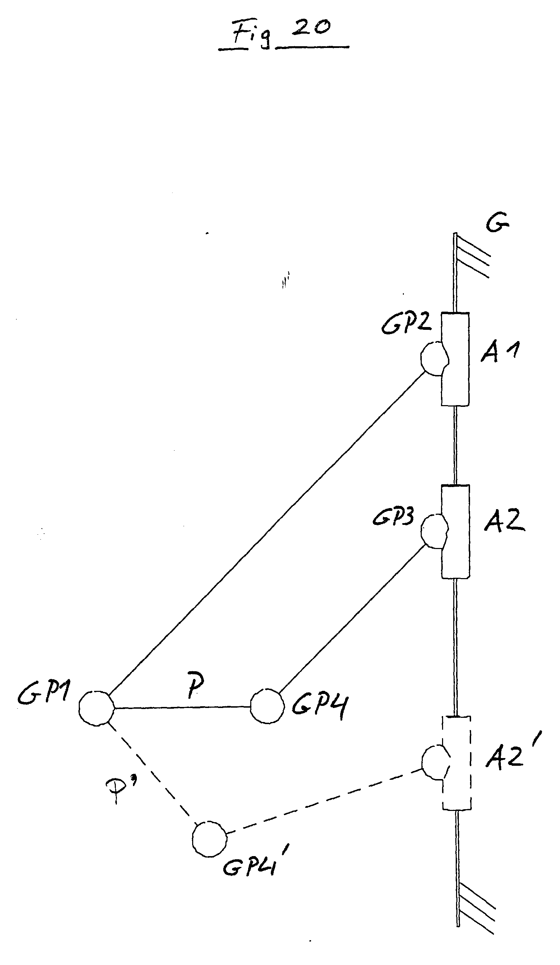

Fig. 19 zeigt die Vorrichtung gemäß Fig. 18 in Draufsicht, wobei die Plattform P ihre horizontale Lage einnimmt. Fig. 19a zeigt in Vorderansicht die Vorrichtung, deren Plattform in die vertikale Lage P' verschwenkt worden ist.

Fig. 19b zeigt eine Draufsicht auf die Vorrichtung, wenn sich die Plattform in ihrer vertikalen Lage P' befindet. Da die den Linearantrieben A1 und A3 zugeordneten Gelenkvierecke mit ihren Stäben an den oberen und unteren Ecken der Plattform P' angreifen, sind diese Gelenkvierecke aus ihrer ursprünglichen Bewegungsebene herausgedreht worden, so daß die Anlenkpunkte der Gelenkvierecke an der Plattform P' vor und hinter der Zeichenebene liegen. Die hierzu notwendigen Lageveränderungen der Stäbe dieser Gelenkvierecke sind infolge der beschriebenen Ausbildung einfach möglich.

Fig. 20 schließlich zeigt eine Vorrichtung, bei der eine weitere Möglichkeit der Änderung der Orientierung der Plattform P über die Winkellage der Gelenkpunkte GP1 bis GP4 des Gelenkviereckes möglich ist. Die Gelenkpunkte GP2 und GP3 werden über den zusätzlichen Linearantrieb A2, der sich auf demselben Grundaufbau bewegt wie der Linearantrieb A1, in ihrem Abstand zueinander verändert. Wird der Linearantrieb A2 aus der mit ausgezogenen Linien dargestellten Ausgangslage in die mit gestrichelten Linien angedeutete Lage A2' verfahren, ergibt sich eine Orientierungsänderung der Plattform P in die Position P'. Selbstverständlich können auch bei dieser Anordnung in den Stäben, wie in den Fig. 13 bis 17 beispielhaft dargestellt, zusätzliche Stellantriebe zur Orientierungsänderung über das räumliche Gelenkviereck angeordnet sein.

## Patentansprüche

1. Vorrichtung zur Erzeugung einer definierten Positionierung und Orientierung mindestens einer Plattform, an die Stabelemente gelenkig angeschlossen sind,
dadurch gekennzeichnet, daß die Stabelemente (S1 bis S4) Teil mindestens eines Gelenkviereckes sind, dessen Winkellage motorisch zur Orientierung der Plattform (P) einstellbar ist.

2. Vorrichtung nach Anspruch 1,
dadurch gekennzeichnet, daß mindestens ein Stabelement (S1 bis S4) des Gelenkviereckes motorisch verstellbar ist.

3. Vorrichtung nach Anspruch 1 oder 2,
dadurch gekennzeichnet, daß zum Einstellen der Winkellage ein Drehantrieb (D, D1 bis D4) vorgesehen ist.

4. Vorrichtung nach Anspruch 3,
dadurch gekennzeichnet, daß mit dem Drehantrieb (D) das Stabelement (S1) um eine winklig, vorzugsweise senkrecht zu ihm liegende Achse (DA) drehbar ist.

5. Vorrichtung nach Anspruch 1 oder 2,
dadurch gekennzeichnet, daß die Winkellage durch eine motorische Verstellung der Länge wenigstens eines Stabelementes (S1 bis S4) des Gelenkviereckes erfolgt.

6. Vorrichtung nach Anspruch 5,
dadurch gekennzeichnet, daß ein Schubgelenk (Z, Z1, Z2) zur Längenverstellung des Stabelementes (S1 bis S4) vorgesehen ist.

7. Vorrichtung nach Anspruch 6,
dadurch gekennzeichnet, daß das Schubgelenk (Z1, Z2) innerhalb des Stabelementes (S1 bis S4) liegt.

8. Vorrichtung nach Anspruch 6,
dadurch gekennzeichnet, daß das Schubgelenk (Z) über mindestens einen Verbindungsarm (A1) mit dem längenverstellbaren Stabelement (S1 bis S4) verbunden ist.

9. Vorrichtung nach einem der Ansprüche 1 bis 8,
dadurch gekennzeichnet, daß die Winkellage durch Drehen wenigstens eines Teils eines Stabelementes (S1 bis S4) um seine Achse einstellbar ist.

10. Vorrichtung nach Anspruch 9,
dadurch gekennzeichnet, daß im Stabelement (S1 bis S4) ein Drehantrieb (D1 bis D4) angeordnet ist, mit dem ein Stabteil (S1' bis S4') des Stabelementes um seine Achse gegenüber dem anderen Stabteil drehbar ist.

11. Vorrichtung nach einem der Ansprüche 1 bis 10,
dadurch gekennzeichnet, daß das Gelenkviereck zur Einstellung der Winkellage quer zu seiner Ebene aus ihr herausbewegbar ist.

12. Vorrichtung nach Anspruch 11,
dadurch gekennzeichnet, daß das eine Stabelement (S3) um eine Quermittelachse mittels des Drehantriebes (D) drehbar ist.

13. Vorrichtung nach einem der Ansprüche 1 bis 12,
dadurch gekennzeichnet, daß im Stabelement (S1 bis S4) ein Drehantrieb (D1 bis D4) und ein Schubgelenk (Z, Z1, Z2) angeordnet sind.

14. Vorrichtung nach einem der Ansprüche 1 bis 13,
dadurch gekennzeichnet, daß die Plattform (P) an wenigstens zwei, vorzugsweise an drei Gelenkvierecken aufgehängt ist.

15. Vorrichtung nach einem der Ansprüche 1 bis 14,
dadurch gekennzeichnet, daß zumindest ein Gelenkviereck mit mindestens einem Linearantrieb (A1 bis A3) zur Positionierung der Plattform (P) verstellbar ist.

16. Vorrichtung nach Anspruch 15,
dadurch gekennzeichnet, daß zwei Stabelemente des Gelenkvierecks mit jeweils einem Linearantrieb (A1, A2) gelenkig verbunden sind.

17. Vorrichtung nach Anspruch 16,
dadurch gekennzeichnet, daß beide Linearantriebe (A1, A2) auf einer gemeinsamen Linearführung (G) verfahrbar sind.
